# EUROPÄISCHE PATENTANMELDUNG

(11) **EP 1 544 761 A1**
(43) Veröffentlichungstag der Anmeldung: **22.06.2005**
(21) Anmeldenummer: 03029095.1
(22) Anmeldetag: 17.12.2003
(51) Int. Cl.: G06F 17/60

(54) **Verfahren und Vorrichtung zur Erzeugung und zum Versand eines grafischen Abbildes eines elektronisch erzeugten Dokumentes**

(71) Anmelder: Glanz, Axel, Dr., 60437 Frankfurt (DE)
(72) Erfinder: Glanz, Axel Dr., 60437 Frankfurt (DE); Acker, Marius Dipl.-Ing., 63619 Bad Orb (DE); Krömer, Bettina, 63150 Heusenstamm (DE)

(57) **Zusammenfassung**

Die Erfindung betrifft ein Verfahren und eine Vorrichtung im Bereich der elektronischen Informationsdienste zur Erzeugung und zum Versand eines grafischen Abbildes eines elektronisch erzeugten Dokumentes.

## Beschreibung

Die Erfindung betrifft ein Verfahren und eine Vorrichtung im Bereich der elektronischen Informationsdienste zur Erzeugung und zum Versand eines grafischen Abbildes eines elektronisch erzeugten Dokumentes (20).

Die Erfindung trägt dem Gedanken Rechnung, dass immer mehr Briefpost zukünftig in elektronischer Form versandt werden soll. Der Versand von elektronischen Dokumenten erfolgt gegenwärtig in Form von E-Mails (30), die allerdings nicht das ursprüngliche Layout und Erscheinungsbild eines Dokumentes übertragen können. Es besteht lediglich die Möglichkeit das eigentliche Dokument in seinem digitalen Ursprungsformat als Anhang an ein E-Mail auszuliefern.

Der Empfänger kann das eigentliche elektronische Dokument, was als Anhang ausgeliefert wurde, erst dann inhaltlich sehen, wenn er den Anhang extrahiert und mit der dazugehörigen Anwendung oder einer speziellen Betrachtungsanwendung öffnet. Das erfordert jedoch zusätzliche Arbeitsschritte, ist demzufolge unhandlich und umständlich. Des weiteren ist es zur Ansicht des Dokumentes in der Regel erforderlich, dass die dazugehörige Anwendung auf dem Endgerät (2) installiert ist.

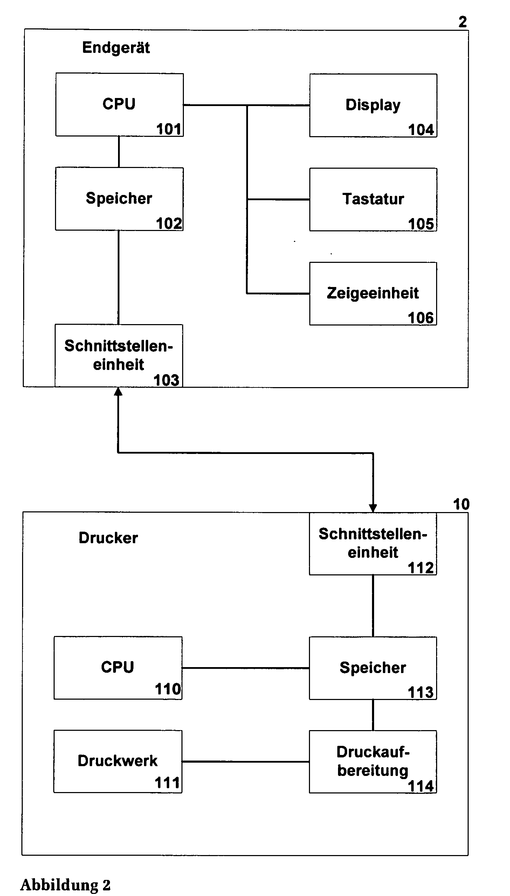

Die andere übliche Methode zum Versand eines elektronisch erzeugten Dokumentes ist der Ausdruck (Abb. 2) auf Papier und Versand des Dokumentes über ein Logistikunternehmen.

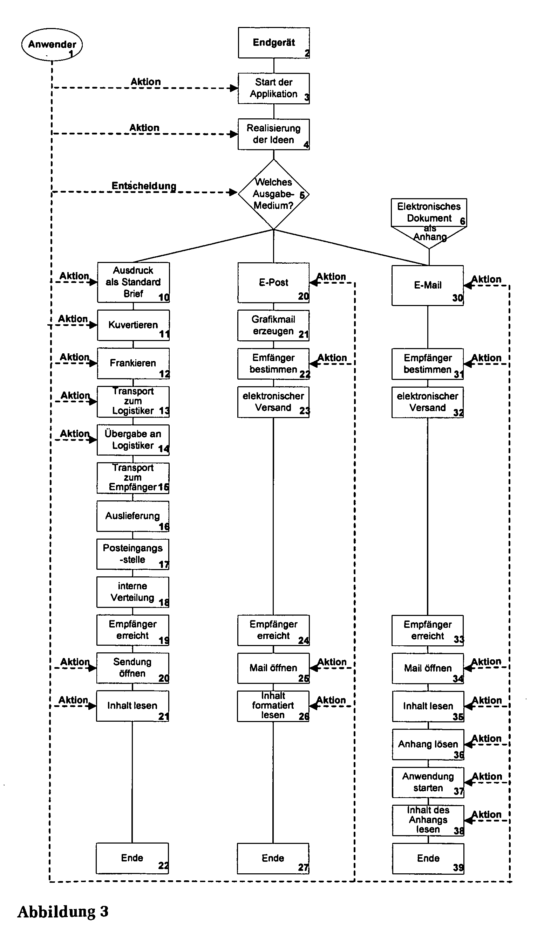

Wie aus der Abbildung 3 in den Einzelschritten 10-22 ersichtlich, verlangt dieses Verfahren eine Vielzahl von kostenintensiven Einzelschritten, die zusätzlich mit einer erheblichen zeitlichen Verzögerung (normalerweise mindestens 1 Tag) verbunden ist.

Die Aufgabe der vorliegenden Erfindung ist es, ein Verfahren, eine Vorrichtung sowie ein System zur Erzeugung und zum Versand eines grafischen Abbildes eines elektronisch erzeugten Dokumentes bereitzustellen.

Diese Aufgabe wird durch ein Verfahren gemäß Anspruch 1, eine Vorrichtung gemäß Anspruch 6, sowie ein System gemäß Anspruch 8 gelöst.

Die Erfindung sorgt dafür, dass in Anwendungen auf Endgeräten (2) eine zusätzliche Medienausgabe zur Verfügung gestellt wird. Neben der Möglichkeit des Ausdrucks und des Versands als Mail bietet die Erfindung eine Ausgabe und Versand als "E-Post" (20) an.

Der Anwender (1) kann auf diese Weise aus seiner gerade eingesetzten Anwendung direkt das Ergebnis als elektronisches Dokument per Mail versenden. Der Empfänger des Mails kann sofort nach dem Öffnen dieses Mails das ursprünglich formatierte Dokument mit allen Formatierungen sehen. Es ist nicht erforderlich einen Mailanhang zu extrahieren und separat zu öffnen.

Die Vorteile der Erfindung beeinflussen sowohl den Bereich des Versenders als auch den des Empfängers umfangreich positiv.

Der Empfänger muss nicht mehr umständlich Anhänge seiner Mails extrahieren und mit der dazugehörigen Quellapplikation starten. Außerdem ist nicht sichergestellt, dass der Empfänger die richtige Quellapplikation zum Öffnen des Anhangs überhaupt besitzt und installiert hat. Auf Empfängerseite wird deshalb ein wesentlich vereinfachter Arbeitsaufwand zum Lesen von eingehenden Grafikmails gegenüber dem Aufwand zur Bearbeitung von herkömmlichen Mails erreicht.

Des Weiteren wird die Versenderseite umfangreich entlastet, da viele Schritte und Kosten des herkömmlichen Briefversands durch den Einsatz der Erfindung entfallen.

Nicht zuletzt bietet die Erfindung die Gewähr dafür, dass im Sinne des Corporate Designs gestaltete elektronische Dokumente auch in abbildungsgetreuer Darstellung beim Empfänger ankommen. Ein herkömmliches E-Mail kann dies nicht gewährleisten.

Die Erfindung wird im Folgenden mit Hilfe der beigefügten Abbildungen anhand von bevorzugten Ausführungsformen näher beschrieben. Die Abbildungen zeigen im Einzelnen:

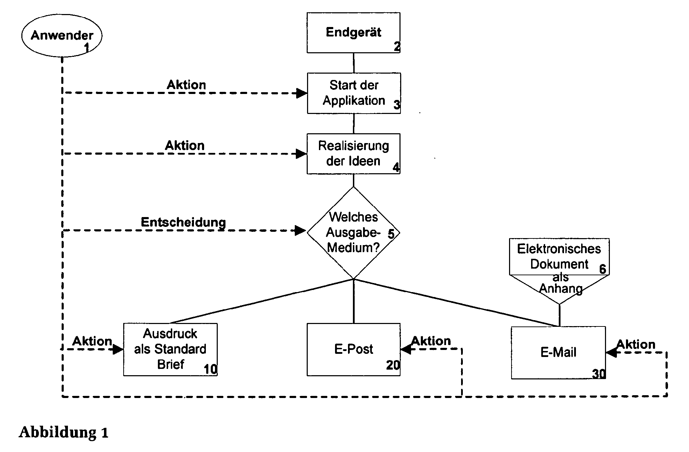

**Abbildung 1**: Schematische Darstellung der verschiedenen Versandmöglichkeiten eines elektronisch erzeugten Dokumentes. Das erfindungsgemäße Verfahren wird hier mit der Beschreibung "E-Post" bezeichnet.
**Abbildung 2**: Schematische Darstellung der Erzeugung einer Druckausgabe eines elektronischen Dokumentes mit Hilfe eines Endgerätes (2) und eines Druckers (10).
**Abbildung 3**: Schematische Darstellung der alternativen Erzeugungs- und Versandwege eines elektronisch erzeugten Dokumentes und der dafür erforderlichen Benutzeraktionen. Die Varianten betreffen entweder ein herkömmliches gedrucktes Dokument (10), das erfindungsgemäße Verfahren (20) als E-Post oder das herkömmliche E-Mail (30).

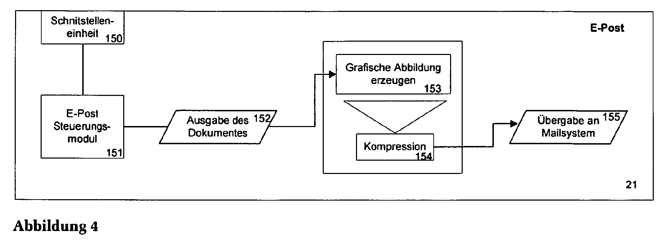

**Abbildung 4:** Schematische Darstellung des erfindungsgemäßen Verfahrens zur Erzeugung eines E-Post Dokuments (21).

Im Folgenden wird zunächst ein Ausführungsbeispiel für ein erfindungsgemäßes Verfahren anhand der Abbildung 3 beschrieben. Anschließend werden Schritte des erfindungsgemäßen Verfahrens in verschiedenen Ausgestaltungsvarianten erläutert.

Ein Anwender (1) steht heute stets vor der Wahl, einen Brief ordnungsgemäß, allen CI-Richtlinien entsprechend per Post (10) zu versenden und damit entsprechende Aufwendungen bei dem physischen Transfer mit dem dazugehörigen Zeitaufwand zu verursachen oder ein E-Mail (30) zu versenden, das schnell und kostengünstig versandt werden kann, aber nicht den CI-Richtlinien entspricht. Der Anwender hat also zwischen Brief oder E-Mail zu wählen (Abb. 3).

Für den Empfänger hat das E-Mail den Nachteil, dass der Versender Tätigkeiten auf den Empfänger übertragen hat. Der Versender spart zwar die Schritte (11 bis 18). Der Empfänger hat bei der E-Mail aber zusätzlich die Schritte (36 bis 39) zu unternehmen, um die gleiche Information wie bei einem Standard Brief zu erhalten.

Im Gegensatz dazu werden bei der E-Post (20) Arbeitsschritte vom Versender übernommen (21 bis 23). Gleichzeitig hat der Versender aber nicht wie beim Brief die Schritte (11 bis 14) und die Kosten für die Schritte (15 bis 19) zu tragen. Er kann sich stattdessen mit Schritt (21 bis 23) begnügen. Auf der anderen Seite muss der Empfänger nur die Schritte (24 bis 26) durchführen. Dies führt auf Empfängerseite zu einer deutlichen Zeitersparnis gegenüber dem E-Mail, das mit den Schritten (33 bis 38) für ihn deutlich aufwendiger ist.

Die technischen Vorraussetzungen für die Realisierung eines erfindungsgemäßen Verfahrens sind in verschiedenen Systemen gegeben. Es kann beispielsweise auf einzelnen PC Arbeitsplätzen oder auch in Client-Server Umgebungen, jeweils mit Verbindung zu einem Mailsystem eingesetzt werden. So kommen als Endgeräte beispielsweise mobile oder fest mit einem Netzwerk verbundene Computer, persönliche digitale Assistenten (PDA) oder auch Organizer bzw. Handheld Computer mit einer Anbindung an ein Mailsystem in Frage.

Mögliche Anwendungen der Erfindungen im gewerblichen Bereich sind bei der Automatisierung des herkömmlichen Schriftverkehrs zu erwarten - Mit der Erfindung kann zukünftig traditionelle Briefpost per E-Mail versendet werden:

Herkömmliche Geschäftsbriefe können in dem üblichen Geschäftsbriefformat elektronisch an alle Kunden gesendet werden, was zu großen Kostensenkungen führt.

Marketingaktionen können in seriösem Geschäftsbriefformat elektronisch durchgeführt werden, was mit sehr niedrigen Werbekosten verbunden ist.

Die Verwaltung und Organisation des sonst physisch anfallenden Geschäftsverkehrs kann elektronisch bearbeitet werden was komplexe Abläufe in einem Unternehmen vereinfacht.

## Patentansprüche

1. Verfahren zur rechnergestützten Erzeugung eines grafischen Abbilds eines elektronisch erzeugten Dokumentes (21) auf einem Endgerät (2), mit den Schritten
a. Erzeugung des grafischen Abbilds eines elektronischen Dokuments auf einem Endgerät mittels Rasterung (152, 153) und Komprimierung (154) und
b. Übergabe des grafischen Dokumentabbilds an ein Mailsystem (155).

2. Verfahren nach Anspruch 1, **dadurch gekennzeichnet, dass** der Anwender (1) die Erzeugung des grafischen Abbilds in verschiedenen Varianten durchführen lassen kann.

3. Verfahren nach Anspruch 1 oder 2, **dadurch gekennzeichnet, dass** die Übergabe des grafischen Dokumentabbilds an das Mailsystem variierend ausgestattet ist.

4. Verfahren nach einem der Ansprüche 1 bis 3, **dadurch gekennzeichnet, dass** der Anwender (1) ein Verschlüsselungsverfahren zum Versand des E-Mails wählen kann.

5. Verfahren nach einem der Ansprüche 1 bis 4, **dadurch gekennzeichnet, dass** der Anwender (1) eine Zertifizierung des E-Mails wählen kann.

6. Vorrichtung zur Steuerung der Erzeugung des grafischen Abbilds eines elektronisch erzeugten Dokumentes, die mittels eines Endgerätes (2) wiedergegeben wird, umfassend:
- ein Steuerungsmodul (151), das den Start des Prozesses, die Erzeugung des grafischen Abbilds (152 und 153), die Komprimierung (154) und die Übergabe an ein Mailsystem (155) steuert.
- eine Schnittstelleneinheit (150), über welche die Anbindung an die Quellanwendung zur Erzeugung des elektronischen Dokumentes übertragen wird.

7. Endgerät (2), das ausgestattet ist, um ein Verfahren nach einem der Ansprüche 1 bis 5 zu realisieren.

8. System zur rechnergestützten Erzeugung eines grafischen Abbilds eines elektronisch erzeugten Dokumentes auf einem Endgerät (2), mit einer Vorrichtung gemäß Anspruch 6 und einem Endgerät umfassend zumindest eine Wiedergabe (104) und eine Interaktionseinheit (104, 105 und 106).

9. Speichermedium, enthaltend ein Computerprogramm oder eine Befehlssequenz, die ein Verfahren nach einem der Ansprüche 1 bis 5 ausführen.
